# EUROPÄISCHE PATENTANMELDUNG

(11) **EP 0 853 992 A2**
(43) Veröffentlichungstag der Anmeldung: **22.07.1998**
(21) Anmeldenummer: 97120316.1
(22) Anmeldetag: 20.11.1997
(51) Int. Cl.: B21K 1/24

(54) **Verfahren zur Herstellung des Armaturengehäuses eines Absperrschiebers**

(30) Priorität: 29.11.1996 DE 19649471
(71) Anmelder: Sempell AG, 41352 Korschenbroich (DE)
(72) Erfinder: Weyand, Manfred, 41063 Mönchengladbach (DE)
(74) Vertreter: Ostertag, Reinhard

(57) **Zusammenfassung**

Mit dem beschriebenen Verfahren läßt sich ein Armaturengehäuse eines Absperrschiebers einstückig einschließlich der Anschlußstutzen herstellen. Das Verfahren macht von zwei Schmiedevorgängen Gebrauch, die beide in derselben Schmiedeform (1) durchgeführt werden: Der erste Schmiedevorgang ist als Vorwärtsfließpreßvorgang ausgestaltet, bei dem mit Hilfe eines ersten Dornes (4) der Rohling (3) in den unteren Bereich des Formhohlraumes (2) gedrückt wird und dabei auch die zylindrischen Rücksprünge (2b) des Formhohlraumes (2) ausfüllt, welche den späteren Anschlußstutzen entsprechen. Der zweite Schmiedevorgang ist als Rückfließpreßvorgang ausgestaltet, bei welchem mittels eines weiteren Dornes (5) entsprechender Dimensionen der vollständige Innenraum (12) des späteren Armaturengehäuses mit Ausnahme der Zu- und Ablaufkanäle, welche die Anschlußstutzen durchziehen, hergestellt wird. Vorzugsweise werden durch den zweiten Dorn (5) beim Rückfließpressen gleichzeitig die Führungselemente mit ausgebildet, welche der Führung des Verschlußgliedes des Absperrventilschiebers bei der Bewegung zwischen der Offen- und der Schließstellung dienen.

## Beschreibung

Die Erfindung betrifft ein Verfahren zur Herstellung des Armaturengehäuses eines Absperrschiebers, welches einen Hauptbereich sowie zwei senkrecht zur Achse des Hauptbereiches verlaufende überstehende Anschlußstutzen und parallele Führungselemente zur seitlichen Führung des Verschlußgliedes des Absperrschiebers aufweist, mit den folgenden Schritten:
a) in einem ersten Schmiedevorgang wird ein Rohling in eine Form gebracht, die zumindest teilweise der Außenform des gewünschten Armaturengehäuses entspricht;
b) in einem zweiten, als Rückfließpressen ausgestalteten Schmiedevorgang wird mit Hilfe eines Dornes zumindest ein Teil des Innenraumes des Armaturengehäuses unter axialer Verlängerung des Rohlings ausgebildet.

Ein derartiges Verfahren ist aus der DE-AS 19 28 585 bekannt. Bei diesem wird nicht das gesamte Armaturengehäuse einschließlich der Anschlußstutzen einstückig durch Schmieden hergestellt. Vielmehr wird durch die beiden erwähnten Schmiedevorgänge nur ein Gehäusemittelteil erzeugt, in welches dann beidseitig die gesondert hergestellten Anschlußstutzen eingeschweißt werden. Die Schmiedevorgänge, mit denen das Gehäusemittelteil hergestellt wird, finden in zwei gesonderten Werkzeugen statt, wobei der erste Schmiedevorgang als Gesenkschmieden ausgeführt wird. Ersichtlich ist das bekannte Herstellungsverfahren teuer, da eine Vielzahl von Verfahrensschritten, insbesondere das nachträgliche Einschweißen der Anschlußstutzen, sowie mehrere Schmiedeformen erforderlich sind.

Aufgabe der vorliegenden Erfindung ist es, ein Verfahren der eingangs genannten Art anzugeben, das kostengünstig durchzuführen ist.

Diese Aufgabe wird erfindungsgemäß dadurch gelöst, daß beide Verfahrensschritte in einer einzigen Schmiedeform ausgeführt werden, dessen Formhohlraum im unteren Bereich der Außenkontur des gewünschten Armaturengehäuses einschließlich der Anschlußstutzen entspricht,
wobei
c) der erste Schmiedevorgang ein mit einem weiteren in den Formhohlraum eingeführten Dorn durchgeführter Vorwärtsfließpreßvorgang ist, bei welchem der Rohling vollständig in den unteren Bereich des Formhohlraumes einschließlich der die Anschlußstutzen bildenden seitlichen Rücksprünge gepreßt wird;
d) bei dem anschließenden Rückwärtsfließpreßvorgang der gesamte Innenraum des Armaturengehäuses mit Ausnahme der die Anschlußstutzen durchziehenden Zu- und Ablaufkanäle ausgebildet wird.

Erfindungsgemäß wird also das gesamte Armaturengehäuse einschließlich der Anschlußstutzen einstückig hergestellt, so daß keine gesonderten Schweißvorgänge mehr erforderlich sind. Der gesamte Herstellungsvorgang erfordert ausschließlich eine einzige Schmiedeform, wobei bei den aufeinanderfolgenden Schmiedevorgängen nur zwei unterschiedliche Dorne eingesetzt zu werden brauchen. Die sich auf diese Weise ergebenden Oberflächen am bearbeiteten Werkstück sind von solcher Güte und Präzision, daß eine Nachbearbeitung entbehrlich ist. Auf diese Weise lassen sich gegenüber dem bekannten Verfahren erhebliche Kosten einsparen.

Besonders bevorzugt wird eine Ausgestaltung des erfindungsgemäßen Verfahrens, bei welchem bei dem Rückfließpreßvorgang an die Mantelfläche des Innenraumes des entstehenden Armaturengehäuses die Führungselemente für das Verschlußglied einstückig mit angeformt werden. Ein einstückiges Anformen von Führungselementen findet zwar auch schon bei der Herstellung des Gehäusemittelteiles nach dem in der erwähnten DE-AS 19 28 585 beschriebenen Verfahren statt. Erfindungsgemäß werden aber die Führungselemente an das einstückige, die Anschlußstutzen umfassende Armaturengehäuse angeschmiedet.

In manchen Fällen ist es aus hier nicht näher interessierenden Gründen zweckmäßiger, wenn die Mantelfläche des Innenraumes des hergestellten Armaturengehäuses glatt ist und die Führungselemente für das Verschlußglied an gesondert hergestellten Teilen ausgebildet werden, die nachträglich im Innenraum des Armaturengehäuses befestigt werden. Dieser Vorgehensweise folgen zwei besonders günstige Varianten des erfindungsgemaßen Verfahrens. Bei der einen sind die Führungselemente an zwei Führungsprofilen vorgesehen, welche an diametral gegenüberliegenden Mantellinien des Innenraumes des Armaturengehäuses angeschweißt werden. Die andere Verfahrensvariante sieht so aus, daß alle Führungselemente sowie die Ventilsitze für das Verschlußglied an einem einstückigen Einsatzteil ausgebildet werden, das in den Innenraum des Armaturengehäuses eingeführt und dort in einer Position befestigt wird, in welcher die Ventilsitze koaxial zu den Zu- und Ablaufkanälen des Armaturengehäuses sind. Bei diesen beiden letztgenannten Ausgestaltungen des erfindungsgemäßen Herstellungsverfahrens wird durch die Führungselemente für das Verschlußglied des Absperrschiebers die Wand des Armaturengehäuses in keiner Weise geschwächt, da die die Führungselemente tragenden, gesondert angefertigten Teile auf eine glatt durchgehende, z.B. im Querschnitt kreisförmige, Mantelfläche des Innenraumes des Armaturengehäuses aufgesetzt werden können.

Ausführungsbeispiele der Erfindung werden nachfolgend anhand der Zeichnung näher erläutert; es zeigen
- Figuren 1a bis 1c: verschiedene Stufen der Herstellung eines Armaturengehäuses für einen Absperrschieber;
- Figur 2: einen horizontalen Schnitt durch einen Teil eines Aosperrschiebers mit einem nach dem erfindungsgemäßen Verfahren hergestellten Armaturengehäuses, wobei die Schnittebene in der Mittelebene der Zu- und Abflußkanäle liegt;
- Figur 3: einen Schnitt, ähnlich der Figur 2, durch ein zweites Ausführungsbeispiel eines Absperrschiebers mit einem erfindungsgemäß hergestellten Armaturengehäuse;
- Figur 4: einen Schnitt, ähnlich den Figuren 2 und 3, durch ein drittes Ausführungsbeispiel eines Absperrventils mit einem erfindungsgemäß hergestellten Armaturengehäuse.

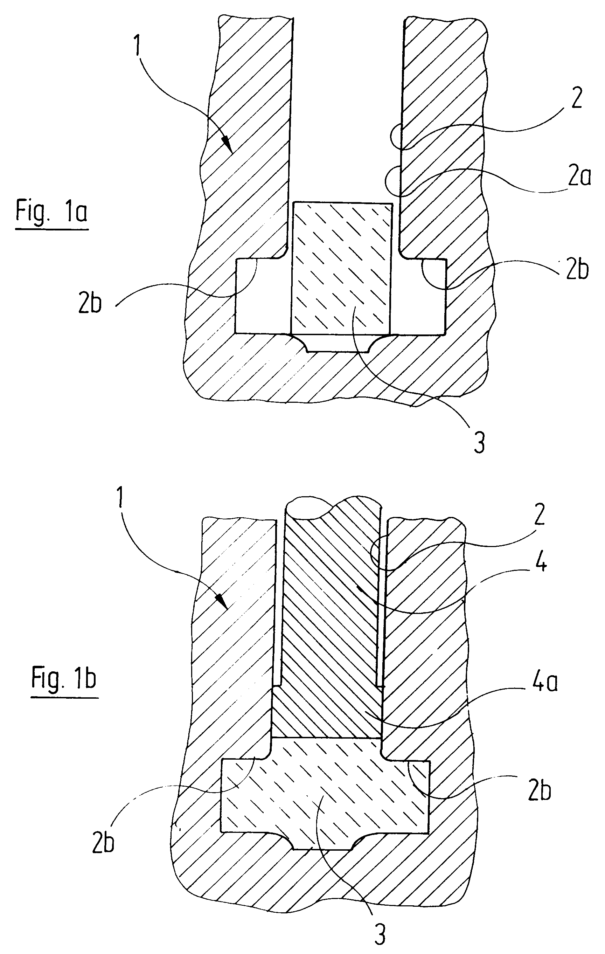

In den Figuren 1a bis 1c sind die wichtigsten Stufen eines Verfahrens dargestellt, mit welchem ein einstückiges, die Anschlußstutzen umfassendes Armaturengehäuse eines Absperrschiebers hergestellt werden kann.

Das gesamte Herstellungsverfahren findet in einer einzigen Schmiedeform statt, die in den Figuren 1a bis 1c das Bezugszeichen 1 trägt und zur Entformung des fertig bearbeiteten Werkstückes in nicht näher dargestellter Weise teilbar ist. Die Schmiedeform 1 umschließt einen Formhohlraum 2, der in seinem unteren Bereich der Außenkontur des herzustellenden Armaturengehäuses entspricht. Das heißt, an einen im wesentlichen zylindrischen, vertikal ausgerichteten Hauptbereich 2a schließen sich unten zwei diametral gegenüberliegende, koaxiale zylindrische Rücksprünge 2b an. Der Durchmesser des zylindrischen Hauptbereiches 2a des Formhohlraumes 2 entspricht dem Durchmesser des Hauptbereiches des herzustellenden Armaturengehäuses, während die Durchmesser der zylindrischen Rücksprünge 2b dem Außendurchmesser der einstückig an das Armaturengehäuse anzuformenden Anschlußstutzen entsprechen.

Die Herstellung des Armaturengehäuses beginnt mit dem Einführen eines Rohlings 3 in den Formhohlraum 2, der mit seiner unteren Kante an einer entsprechenden Stelle im unteren Bereich des Formhohlraumes 2 aufsteht. Bei dem Material des Rohlinges 3 handelt es sich vorzugsweise um eine der folgenden DIN-Qualitäten: C 22.8 1.0406; 15 Mo 3 1.5415, 13 CrMo 44 1.7335; 10 CrMo 910 1.7380. Der Rohling 3 befindet sich auf einer Temperatur von maximal 1250^{o} C.

Der so in den Formhohlraum 2 eingebrachte Rohling 3 wird nun einem ersten Verfahrensschritt, einem Vorwärtsfließpreßvorgang, unterzogen, dessen Ergebnis in Figur 1b dargestellt ist. Dabei wird ein erster Dorn 4 eingesetzt, dessen vergrößerter Kopf 4a einen Außendurchmesser aufweist, der dem Innendurchmesser des Hauptbereiches 2a des Formhohlraumes 2 entspricht. Durch diesen ersten Dorn 4a wird der Rohling 3 in einer Weise verformt, daß er den gesamten unteren Bereich des Formhohlraumes 2, einschließlich der zylindrischen Rücksprünge 2b, ausfüllt. Der Rohling 3 erhält in diesem Verfahrensschritt bereits die Außenkontur des unteren Bereiches des herzustellenden Armaturengehäuses, ist jedoch noch massiv (ohne ausgebildeten Innenraum) und weist noch nicht die endgültige Höhe in vertikaler Richtung auf.

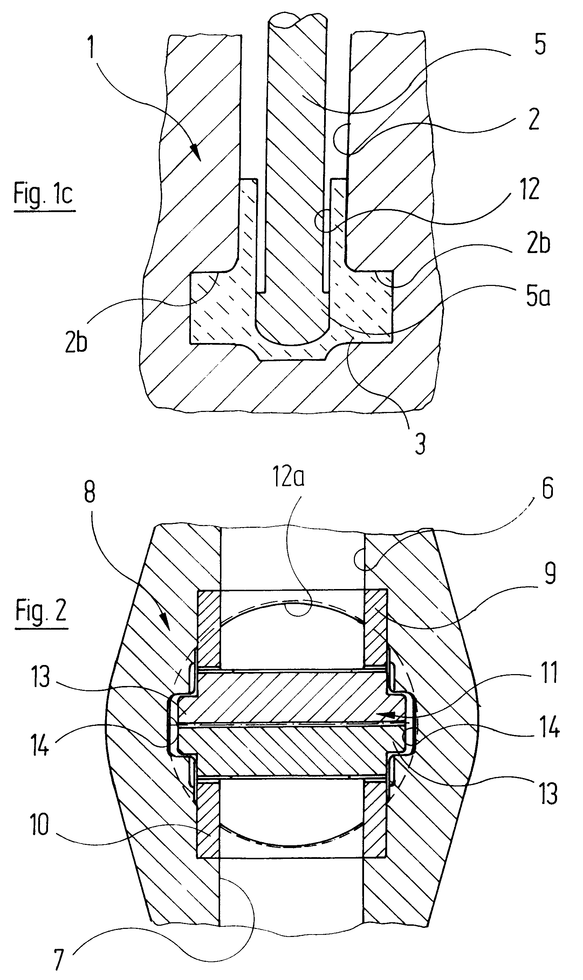

Die angestrebte Form des Armaturengehäuse wird in einem dritten Verfahrensschritt erzielt, dessen Ergebnis in Figur 1c dargestellt ist. Hierzu wird der erste Dorn 4 aus dem Formhohlraum 2 der Schmiedeform 1 entfernt. Statt seiner wird ein zweiter Dorn 5 in den Formhohlraum 2, koaxial zu dessen Hauptbereich 2a, eingeführt. Der Kopf 5a weist senkrecht zur Achse des zweiten Dornes 5 einen Querschnitt auf, welcher dem Querschnitt des Innenraumes des herzustellenden Armaturengehäuses entspricht. Im einfachsten Falle ist der Kopf 5a des zweiten Dornes 5 im Querschnitt kreisförmig; bei Verwendung eines solchen Dornes entsteht dann ein Innenraum des Armaturengehäuses, der ebenfalls im Querschnitt kreisförmig mit glatten Mantelflächen ist.

Beim Einführen des zweiten Dornes 5a in den in Figur 1b dargestellten Rohling 3 erfolgt ein Rückfließpressen. Das heißt: Da das Material, aus welchem der Rohling 3 besteht, in Vorwärtsrichtung nicht mehr weiterbewegt werden kann, fließt ein Teil des Materiales entlang der Außenfläche des Kopfes 5a und entlang der Mantelfläche des Hauptbereiches 2a des Formhohlraumes 2 nach oben und bildet so den oberen, im wesentlichen zylindrischen Hauptbereich des Armaturengehäuses. Offensichtlich entspricht die Wandstärke dieses Hauptbereiches des Armaturengehäuses der Differenz der Radien des Hauptbereiches 2a des Formhohlraumes 2 und des Kopfes 5a des zweiten Dornes 5.

Nach Abkühlen des so entstandenen Werkstückes kann die Schmiedeform 1 geöffnet und das Werkstück entnommen werden. Dieses bedarf an den Flächen, die durch den zweistufigen Schmiedevorgang erzeugt wurden, keiner weiteren Nachbearbeitung mehr. Es müssen nur noch die Zu- und Ablaufkanäle in die Anschlußstutzen eingearbeitet werden.

Die Schmiedeform 1 besteht vorzugsweise aus Stahl; die Dorne 4 und 5 besitzen eine besonders harte Oberfläche und werden gelegentlich auf Maßhaltigkeit überprüft.

In Figur 2 ist ein Teilschnitt durch einen Absperrventilschieber dargestellt, welcher ein besonders bevorzugtes Ausführungsbeispiel eines Armaturengehäuses 8 enthält. Der Schnitt ist dabei horizontal, in der Mittelebene der Zu- und Ablaufkanäle 6, 7 gelegt, welche die Anschlußstutzen des Armaturengehäuses 8 durchziehen. Die Anschlußstutzen selbst sind in Figur 2 abgebrochen, also aus Übersichtlichkeitsgründen nicht mehr dargestellt; sie sind oben und unten angesetzt zu denken.

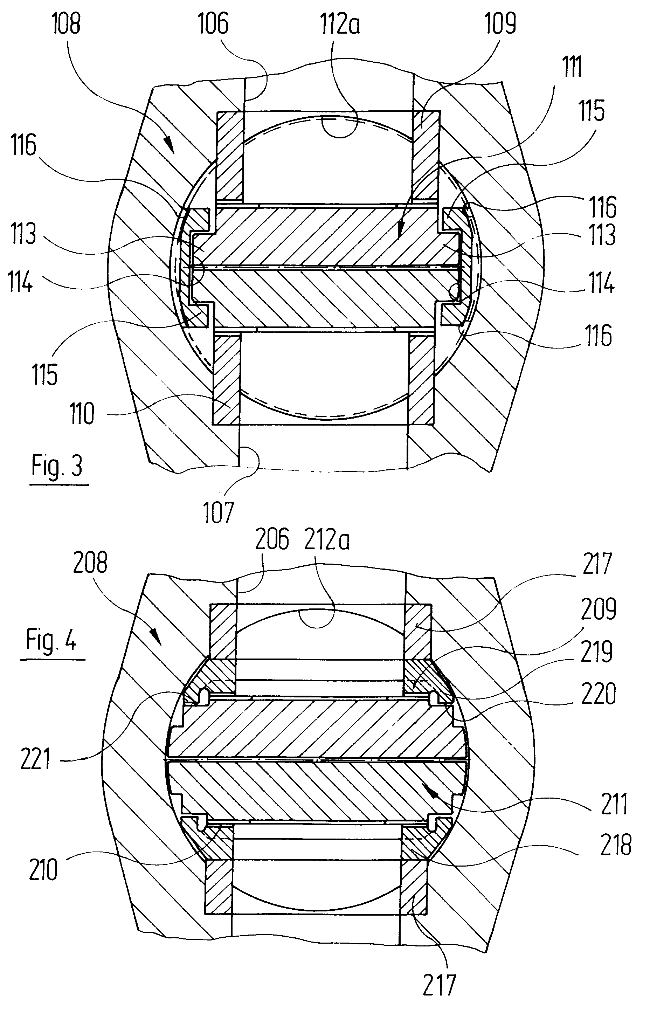

Der Absperrschieber umfaßt neben dem Armaturengehäuse 8, auf welches weiter unten naher eingegangen wird, in an und für sich bekannter Weise Ventilsitzringe 9, 10, die an den inneren Enden der Zu- bzw. Ablaufkanäle 6, 7 befestigt sind. Diese Ventilsitzringe 9, 10 wirken mit einem zweigeteilten Verschlußglied 11 des Ventilschiebers zusammen, der insgesamt über eine in der Zeichnung nicht dargestellte Spindel aus der in Figur 4 gezeigten Schließstellung senkrecht zur Zeichenebene nach hinten in eine Offenstellung gefahren werden kann. Das Verschlußglied 11 bewegt sich dabei aus der Lage zwischen den Ventilsitzringen 9, 10 in den zylindrischen Hauptbereich 12a des Innenraumes 12 des Armaturengehäuses 8, der in dem in Figur 1c dargestellten Verfahrensschritt durch den Kopf 5a des zweiten Dornes 5 hergestellt wurde. Bei dieser Bewegung wird das Verschlußglied 11 durch seitlich überstehende, rippenartige Führungsprofile 13 geführt, welche in entsprechend profilierte Führungsnuten 14 im Innenraum 12 des Armaturengehäuses 8 eingreifen. Diese Führungsnuten 14 sind bei der Durchführung des in Figur 1c dargestellten Verfahrensschrittes bereits einstückig mit angeformt worden. Hierzu ist einfach der Kopf 5a des zweiten Dornes 5 mit einer entsprechenden Querschnittsprofilierung versehen. Wie Figur 2 zeigt, liegt, im Querschnitt gesehen, der Grund der Führungsnuten 14 auf dem Kreis, welcher der allgemeinen Form des Hauptbereiches 12a des Innenraumes 12 entspricht. Das Armaturengehäuse 8 wird also durch diese Führungsnuten 14 nicht geschwächt.

Das in Figur 2 gezeigte Armaturengehäuse 8 mit einstückig angeschmiedeten Führungsnuten 14 ist selbstverständlich besonders kostengünstig, da für die Einarbeitung der Führungsnuten 14 keine gesonderten Herstellungsvorgänge erforderlich sind. Genauigkeit und Oberflächengüte des Rückwärtsfließpreßvorganges, in welchem die Führungsnuten 14 bei dem in Figur 1c gezeigten Verfahrensschritt entstehen, reichen vollständig aus, so daß eine Nachbearbeitung der entsprechenden Flächen entbehrlich ist.

Das oben anhand der Figuren 1a bis 1c geschilderte Verfahren kommt jedoch auch bei solchen Armaturengehäusen in Betracht, bei denen aus hier nicht näher interessierenden Gründen die Führungselemente des Armaturengehäuses, welche die seitliche Führung des Verschlußgliedes des Schiebers übernehmen, erst nachträglich eingebaut werden. Zwei Ausführungsbeispiele hierfür sind in den Figuren 3 und 4 dargestellt.

Das Ausführungsbeispiel von Figur 3 ähnelt demjenigen von Figur 2 sehr stark, so daß entsprechende Teile mit denselben Bezugszeichen, zuzüglich 100, gekennzeichnet werden können. So weist also das Ausführungsbeispiel von Figur 3 ebenfalls ein Armaturengehäuse 108 auf, dessen in der Zeichnung nicht mehr erkennbare Anschlußstutzen von Zu- und Ablaufkanälen 106 und 107 durchzogen werden. An den inneren Enden der Zu- und Ablaufkanäle 106, 107 sind Ventilsitzringe 109, 110 angebracht, die mit dem Verschlußglied 111 eines Ventilschiebers zusammenwirken. Auch das Verschußglied 111 ist mit seitlichen, rippenartigen Führungsprofilen 113 versehen, welche in Führungsnuten 114 eingreifen. Diese Führungsnuten 114 sind nunmehr aber - anders als beim Ausführungsbeispiel von Figur 2 - nicht direkt in das Armturengehäuse 108 eingeschmiedet. Vielmehr befinden sie sich an gesonderten Führungsprofilteilen 115, welche an der Innenmantelfläche des Innenraumes 112 des Armaturengehäuses 108 an der geeigneten Stelle durch Schweißungen 116 befestigt sind.

Bei der Herstellung des in Figur 3 dargestellten Armaturengehäuses 108 können dieselbe Schmiedeform 1 und derselbe erste Dorn 4 (vergl. Figuren 1a und 1b) eingesetzt werden, die auch bei der Herstellung des Armaturengehäuses 8 von Figur 2 verwendet werden. Statt eines zweiten Dornes 5 mit einem eine Führungsnut erzeugenden Kopf 5a wird jedoch zur Herstellung des Armaturengehäuses 108 von Figur 3 ein zweiter Dorn 105 eingesetzt, dessen vergrößerter Kopf 105a im Querschnitt vollständig kreisförmig ist, also einen Innenraum 112 des Armaturengehäuses 108 erzeugt, der ebenfalls im Querschnitt vollständig kreisförmig ist. Auf die Mantelfläche des so erzeugten Innenraumes 112 können dann, einander gegenüberliegend, die Führungsprofilteile 115 aufgeschweißt werden.

Auch das Ausführungsbeispiel von Figur 4 ähnelt stark dem Ausführungsbeispiel von Figur 2; entsprechende Teile sind daher mit denselben Bezugszeichen, zuzüglich 200, gekennzeichnet. In Figur 4 finden sich das Armaturengehäuse 208, die Zu- und Ablaufkanäle 206, 207 und das Verschußglied 211 des Ventilschiebers wieder. Ringförmige Einsätze 217 befinden sich an den inneren Enden der Zu- bzw. Ablaufkanäle 206, 207 in ähnlicher Weise, wie die Ventilsitzeringe 9, 10 beim Ausführungsbeispiel von Figur 2. Die Ventilsitze 209 und 210 sind in Figur 4 an einem einheitlichen Einsatzteil 218 ausgebildet, welches "hemdartig" von oben her in den unteren Bereich des Innenraumes 212 des Armaturengehäuses 208 abgesenkt und dort so befestigt ist, daß die Ventilsitze 209, 210 koaxial zu den Zu- bzw. Ablaufkanälen 206, 207 sind.

An das Einsatzteil 218 sind jeweils paarweise auf gegenüberliegenden Seiten der senkrecht zur Zeichenebene verlaufenden Mittelebene des Armaturengehäuses 208 Führungsrippen 219 einstückig angeformt, welche mit aufeinander zu, also in Richtung auf die gegenüberliegenden Seiten des Verschlußgliedes 211, gerichteten Führungsflächen 220 versehen sind. Diese Führungsflächen 220 wirken mit parallelen Führungsflächen 221 an den gegenüberliegenden Seiten des Verschlußgliedes 211 zusammen, so daß durch die aneinander anliegenden Führungsflächen 220, 221 eine präzise Führung des Verschlußgliedes 211 auf dem Weg zwischen der Offenstellung und der in der Zeichnung dargestellten Schließstellung möglich ist.

Bei der Herstellung des in Figur 4 dargestellten Armaturengehäuses 208 können dieselben Werkzeuge eingesetzt werden wie bei der Herstellung des Armaturengehäuses 108 von Figur 3.

## Patentansprüche

1. Verfahren zur Herstellung des Armaturengehäuses eines Absperrschiebers, welches einen Hauptbereich sowie zwei senkrecht zur Achse des Hauptbereiches verlaufende überstehende Anschlußstutzen und parallele Führungselemente zur seitlichen Führung des Verschlußgliedes des Absperrschiebers aufweist, mit den folgenden Schritten:
a) in einem ersten Schmiedevorgang wird ein Rohling in eine Form gebracht, die zumindest teilweise der Außenform des gewünschten Armaturengehäuses entspricht;
b) in einem zweiten, als Rückfließpressen ausgestalteten Schmiedevorgang wird mit Hilfe eines Dornes zumindest ein Teil des Innenraumes des Armaturengehäuses unter axialer Verlängerung des Rohlings ausgebildet;
dadurch gekennzeichnet, daß
beide Verfahrensschritte in einer einzigen Schmiedeform (1) ausgeführt werden, dessen Formhohlraum (2) im unteren Bereich der Außenkontur des gewünschten Armaturengehäuses (8; 108; 208) einschließlich der Anschlußstutzen entspricht,
wobei
c) der erste Schmiedevorgang ein mit einem weiteren in den Formhohlraum (2) eingeführten Dorn (4) durchgeführter Vorwärtsfließpreßvorgang ist, bei welchem der Rohling (3) vollständig in den unteren Bereich des Formhohlraumes (2) einschließlich der die Anschlußstutzen bildenden seitlichen Rücksprünge (2b) gepreßt wird;
d) bei dem anschließenden Rückwärtsfließpreßvorgang der gesamte Innenraum (12; 112; 212) des Armaturengehäuses (8; 108; 208) mit Ausnahme der die Anschlußstutzen durchziehenden Zu- und Ablaufkanäle (6, 7; 106, 107; 206, 207) ausgebildet wird.

2. Verfahren nach Anspruch 1, dadurch gekennzeichnet, daß bei dem Rückfließpreßvorgang an die Mantelfläche des Innenraumes (12) des entstehenden Armaturengehäuses (8) die Führungselemente (14) für das Verschlußglied (11) einstückig mit angeformt werden.

3. Verfahren nach Anspruch 1, dadurch gekennzeichnet, daß die Führungselemente (114; 214) für das Verschlußglied (111; 211) an gesondert hergestellten Teilen (115; 218) ausgebildet werden, die nachträglich im Innenraum (112; 212) des Armaturengehäuses (108; 208) befestigt werden.

4. Verfahren nach Anspruch 3, dadurch gekennzeichnet, daß die Führungselemente (114) an zwei Führungsprofilteilen (115) vorgesehen werden, welche an diametral gegenüberliegenden Mantellinien des Innenraumes (112) des Armaturengehäuses (108) angeschweißt werden.

5. Verfahren nach Anspruch 3, dadurch gekennzeichnet, daß alle Führungselemente (219, 220) sowie die Ventilsitze (209, 210) für das Verschlußglied (211) an einem einstückigen Einsatzteil (218) ausgebildet werden, das in den Innenraum (212) des Armaturengehäuses (208) eingeführt und dort in einer Position befestigt wird, in welcher die Ventilsitze (209, 210) koaxial zu den Zuund Auslaufkanälen (206, 207) des Armaturengehäuses (208) sind.
